**Europäisches Patentamt**

(19) **European Patent Office**  (11) Numéro de publication: **0 097 077**

**Office européen des brevets**  **B1**

(12) **FASCICULE DE BREVET EUROPÉEN**

(45) Date de publication du fascicule du brevet:
**13.08.86**

(51) Int. Cl.⁴: **G 11 B 25/06,** G 11 B 15/60

(21) Numéro de dépôt: **83401086.0**

(22) Date de dépôt: **30.05.83**

(54) **Platine de magnétophone.**

(30) Priorité: **11.06.82 FR 8210222**

(43) Date de publication de la demande:
**28.12.83 Bulletin 83/52**

(45) Mention de la délivrance du brevet:
**13.08.86 Bulletin 86/33**

(84) Etats contractants désignés:
**AT BE CH DE GB IT LI NL SE**

(56) Documents cité:
**FR-A-1 058 912**
**US-A-2 728 577**
**US-A-2 893 653**
**US-A-2 996 948**
**US-A-2 997 547**
**US-A-3 380 681**
**US-E-29 733**

(73) Titulaire: **MONDIAL ELECTRONIQUE, Société dite:, 13 boulevard Galliéni, F-94130 Nogent- sur-Marne (FR)**

(72) Inventeur: **van den Driessche, Jacques Marcel Jean, 35 Rue des Meuniers, F-91360 Epinay- sur-Orge (FR)**

(74) Mandataire: **Moncheny, Michel, c/o Cabinet Lavoix 2 Place d'Estienne d'Orves, F-75441 Paris Cedex 09 (FR)**

EP 0 097 077 B1

LIBER, STOCKHOLM 1986

## Description

La présente invention concerne les platines de magnétophone et en particulier de telles platines à usage professionnel.

On connaît déjà de nombreuses réalisations de platines de magnétophone qui dès lors qu'elles doivent être utilisées par des professionnels doivent répondre à des impératifs de précision et de qualité qui les rendent nécessairement compliquées et coûteuses. Les défauts que l'on peut relever dans ces platines connues sont les suivants:

- elles comportent en général un nombre élevé de pièces, ce qui bien entendu augmente leur coût et complique leur montage et leur maintenance;

- la plaque qui sert d'embase aux divers constituants comporte de nombreux plans de références obtenus par usinage et rectification de sorte que la précision globale s'en trouve sensiblement affectée;

- chaque machine est conçue pour une application particulière (par exemple montage, utilisation dans une station de radio locale, enregistrement et reproduction de très haute qualité) ce qui a également pour conséquence de compliquer les opérations de fabrication et de maintenance et d'augmenter les coûts;

- le trajet suivi par la bande est en général compliqué ce qui constitue bien entendu une gêne pour l'utilisateur qui est amené à mettre en place et à enlever fréquemment une bande, notamment dans les opérations de montage.

Le but de cette invention telle qu'elle est caractérisé dans les revendications, est de réaliser une platine de magnétophone qui permette de pallier dans une large mesure ou d'éliminer ces divers inconvénients. Elle doit donc être de construction simple, comporter un nombre de pièces aussi faible que possible, présenter une grande précision, et autoriser à partir des mêmes éléments de base et moyennant des adaptations relativement simples, la réalisation de plusieurs versions adaptées à des utilisations différentes.

Des platines de magnétophone comprenant les caractéristique énoncées dans le préambule de la revendication 1 sont counnues des documents US-A-2 997 547, US-A-2 996 948 et FR-A-1 058 912.

L'invention va être décrite plus en détail ci-dessous en se référant au dessin annexé donné uniquement à titre d'exemple et sur lequel:

- la Fig. 1 est une vue en plan schématique d'une platine suivant l'invention avec l'emplacement de ses principaux composants;

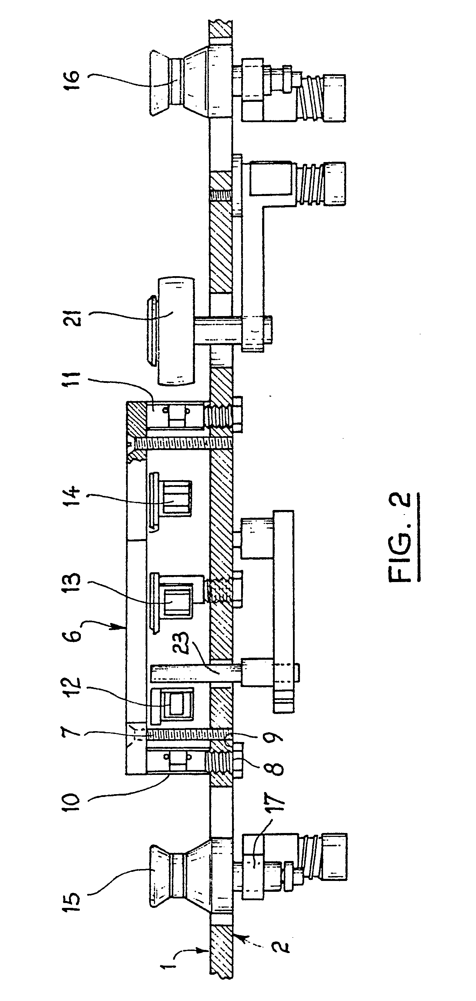

- la Fig. 2 est une vue en coupe suivant la ligne 2-2 de la Fig. 1;

- la Fig. 3 est une vue de dessous également schématique de cette platine.

On a représenté au dessin une platine de magnétophone comprenant une plaque d'embase 1 en FORTAL ou autre matériau analogue présentant une très grande stabilité dimensionnelle. Cette plaque d'embase est rectifiée avec une très grande précision sur sa face inférieure 2 de façon à constituer un plan de référence unique à partir duquel seront déterminées les positions des constituants importants de la platine.

Sous cette platine sont fixés deux supports 3 pour des moteurs 4 d'entraînement de la bande, ces supports étant fixés au moyen de vis et d'entretoises et les arbres de sortie des moteurs pouvant être équipés d'adaptateurs 5 permettant de réaliser la liaison soit avec des bobines, soit avec des plateaux de support de bande.

Un bloc de têtes 6 également usiné avec précision et très rigide est fixé sur la plaque au moyen de vis 7 mais la position de ce bloc de têtes par rapport à la plaque 1 est déterminée par des vis de support 8 fixées sur la face inférieure de cette plaque et dont la tête 9 vient en butée contre la face de référence de la plaque. La longueur de tige de ces vis est déterminée avec une très grande précision et c'est sur l'extrémité de leur tige que vient s'appuyer la face inférieure du bloc de têtes. Ce bloc porte de préférence un guide-bande d'entrée 10 et un guide-bande de sortie 11 et il est équipé de têtes 12, 13, 14 adaptées à l'utilisation particulière envisagée, par exemple, une tête de lecture, une tête d'effacement et une tête d'enregistrement. Ces têtes sont dirigées vers la partie avant de la platine et non vers les plateaux d'enroulement et de déroulement de la bande et la partie de la platine disposée en avant du bloc de têtes est entièrement dégagée.

En amont et en aval de ce bloc de têtes sont disposés respectivement un galet guide-bande amont 15 et un galet guide-bande aval 16 constitués par deux sous-ensembles identiques. Chacun de ces sous-ensembles comprend un bras de support 17 monté oscillant sous la plaque d'embase ce bras portant à son extrémité libre un galet rotatif de construction appropriée. Les axes Y-Y d'oscillation des bras sont disposés à peu près entre les galets et les axes des supports de bandes. Ces sous-ensembles de galets guide-bande sont montés entre des butées réglables 18 constituées dans l'exemple choisi par deux excentriques fixés sur la face inférieure de la plaque. Suivant les applications envisagées, les galets guide-bande peuvent être associés à des générateurs tachymétriques permettant de détecter la vitesse de défilement de la bande et couplés à des dispositifs de régulation appropriés.

Le dispositif est complété par un galet d'entraînement 19 monté sur l'organe de sortie d'un moteur 20 fixé sous la platine, ce galet d'entraînement étant disposé à une faible distance du guide-bande de sortie, entre ce guide-bande et le galet guide-bande aval. Au voisinage de ce galet d'entraînement 19 est disposé un galet presseur 21 dont le rôle est d'appliquer la bande contre le galet d'entraînement. Ce galet presseur est porté par un bras oscillant 22 de construction analogue à celle des deux bras de support des galets guide-bande.

Il est également prévu un doigt dégage-bande 23 disposé en position effacée en arrière de la bande sous le bloc de têtes et qui en position active permet de dégager la bande de ce bloc de têtes. Ce doigt dégage-bande est porté par un bras oscillant 24 agencé de préférence comme les autres bras de support des galets guide-bande et du galet presseur.

Bien entendu, tous les éléments destinés à faire saillie à la partie supérieure de la platine s'étendent dans des lumières ménagées dans cette dernière, ces lumières présentant une forme incurvée lorsque l'élément qu'elles reçoivent se déplace suivant un arc de cercle et étant centrées sur le point d'oscillation de l'organe correspondant.

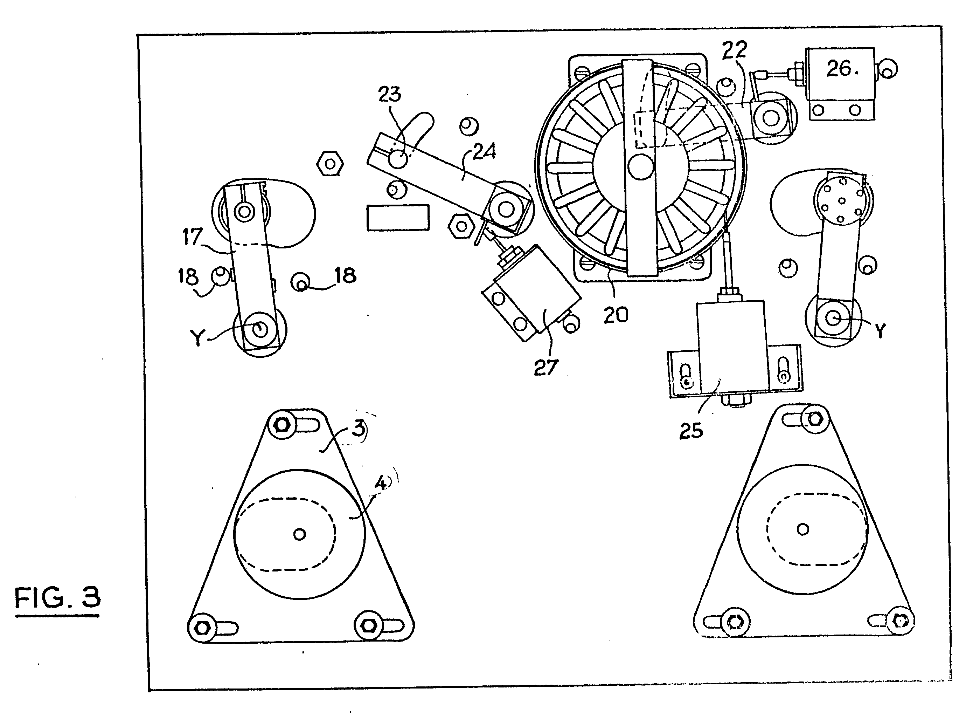

Comme on peut le voir sur la Fig. 3, il est également prévu des moyens d'actionnement du galet presseur et du dégage-bande. Les moyens d'actionnement du galet presseur comprennent deux électro-aimants 25, 26 agissant en séquence, le premier effectuant un mouvement rapide d'approche, tandis que le second est destiné à effectuer un mouvement de fin de course plus précis.

Le dispositif d'actionnement du dégage-bande comprend un électro-aimant simple 27.

Il est également prévu bien qu'ils ne soient pas représentés des moyens de freinage de la bande qui peuvent être de construction classique.

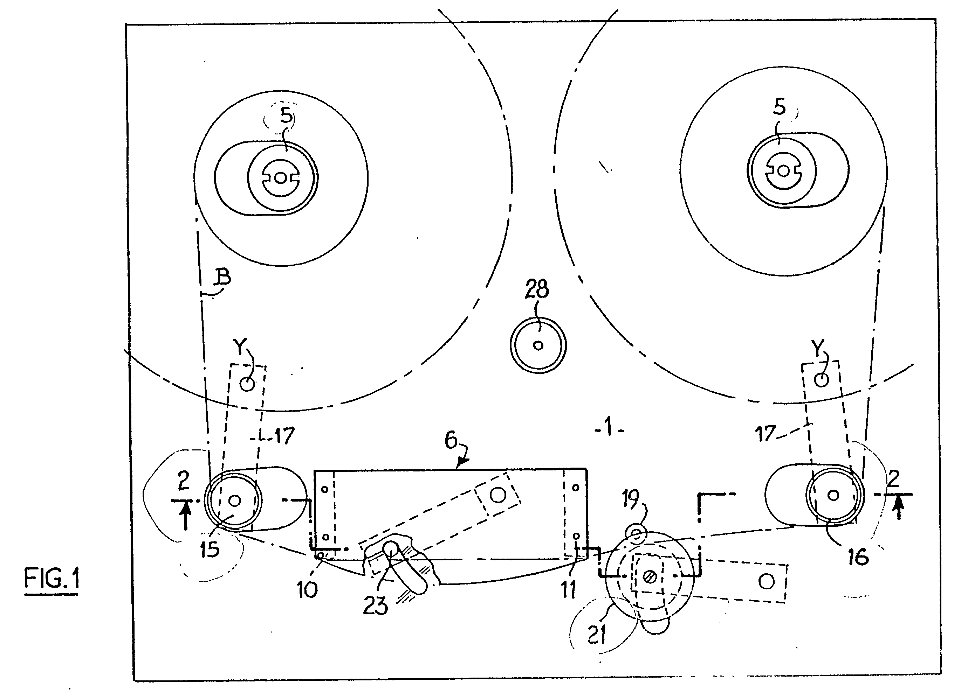

On notera aussi sur la Fig. 1 la position d'un galet 28 dit galet "twisteur", unique, disposé dans la partie centrale de la platine.

La platine qui vient d'être décrite et sur laquelle le trajet de la bande est représenté en trait mixte sur la Fig. 1 présente les particularités suivantes:

- le plan unique de référence de cette platine étant constitué par la face inférieure rectifiée de la plaque d'embase, les constituants importants que sont le bloc de têtes et les galets guide-bande amont et aval peuvent avoir une position qui est déterminée avec une très grande précision. Le bloc de têtes repose en trois points sur des surfaces d'appui dont la position est très précise. Quant aux galets portés par les bras oscillants, leur position est également déterminée en utilisant par exemple une cale prenant appui sur la face inférieure de la platine et par rapport à laquelle chaque galet est positionné avant d'être fixé sur son bras support;
- la face supérieure de la platine n'intervenant pas dans la définition précise de la position des composants peut être anodisée ou peinte sans porter atteinte à la précision de l'ensemble;
- le trajet de la bande B est simple et direct puisque la bande passe sur le galet guide-bande amont 15, sur le guide-bande d'entrée 10, sur les têtes du bloc 6, sur le guide-bande de sortie 11 puis sur le galet d'entraînement 19 et le guide-bande aval 16 sans avoir à contourner ou à former de boucle autour d'un élément quelconque;
- l'utilisation de sous ensembles identiques pour supporter les galets guide-bande, le galet presseur et le dégage-bande constitue évidemment un élément de simplification et de réduction du coût;
- la conception et la réalisation de cette platine permettent de réaliser aisément plusieurs variantes correspondant à des types d'utilisation différents. C'est ainsi que l'on peut réaliser à partir du dispositif décrit ci-dessus et moyennant des adaptations relativement simples: une platine de montage, une platine utilisable par exemple dans une station de radiodiffusion dite "radio locale", ainsi qu'une platine dite "MASTERS" de très haute qualité dotée d'équipements supplémentaires, notamment de dispositifs de régulation de la tension et de la vitesse de la bande.

**Revendications**

1 - Platine de magnétophone, comprenant une plaque d'embase (1), deux ensembles de support (3, 4, 5) pour des organes d'enroulement et de déroulement de la bande, un bloc de têtes (6), des galets guide-bande (15, 16) disposés respectivement en amont et en aval du bloc de têtes, un galet d'entraînement (19) et un galet presseur (21), ces divers composants étant portés par la plaque d'embase, et disposés à la partie supérieure de celle-ci, caractérisée en ce que ladite plaque réalisée en un matériau à grande stabilité dimensionnelle comporte une surface inférieure rectifiée qui constitue une surface de référence unique (2) par rapport à laquelle est déterminée la position des organes essentiels que constituent le bloc de têtes (6) et les galets guide-bande amont et aval (15, 16), ces derniers étant portés par des bras (17) montés oscillants par rapport à la plaque d'embase et fixés sur la face inférieure de cette plaque.

2 - Platine de magnétophone suivant la revendication 1, caractérisée en ce que le galet presseur (21) est également porté par un bras monté oscillant par rapport à la plaque d'embase et fixé sur la face inférieure de cette plaque.

3 - Platine de magnétophone suivant la revendication 2, caractérisée en ce que les axes (Y-Y) d'oscillation par rapport à la plaque d'embase (1), des bras (17) portant les galets guide-bande (15, 16) sont disposés à peu près entre les axes des supports de bande et les galets guide-bande (15, 16).

4 - Platine de magnétophone suivant la revendication 2, caractérisée en ce que les bras de support (17) des galets guide-bande (15, 16) et presseur (21) constituent des sous-ensembles à peu près identiques.

5 - Platine de magnétophone suivant la revendication 4, caractérisée en ce qu'il est prévu un doigt dégage-bande (23) porté par un bras (24) oscillant sur la face inférieure de la plaque d'embase et qui est de construction analogue à celle des autres bras.

6 - Platine de magnétophone suivant l'une quelconque des revendications 2 à 5, caractérisée en ce que les bras oscillants (17) sont mobiles entre deux butées réglables.

7 - Platine de magnétophone suivant la revendication 1, caractérisée en ce que le bloc de têtes (6) repose sur trois vis de support (8) fixées sur la face inférieure de la plaque d'embase (1).

8 - Platine de magnétophone suivant la revendication 1, caractérisée en ce que le bloc de têtes (6) est muni d'un guide-bande d'entrée (10) et d'un guide-bande de sortie (11).

9 - Platine de magnétophone suivant la revendication 1, caractérisée en ce que la partie de la platine disposée en avant du bloc de têtes (6) est entièrement dégagée et seul le galet presseur (21) se trouve en avant de la bande.

**Patentansprüche**

1. Tonbandlaufwerk mit einer Grundplatte (1), zwei Traganordnungen (3, 4, 5) für Aufwickelorgane und Abwickelorgane des Bands, einem Kopfblock (6), Bandführungsrollen (15, 16) in Bewegungsrichtung aufwärts bzw. abwärts des Kopfblocks, einer Antriebsrolle und einer Andrückrolle (21), wobei diese verschiedenen Komponenten von der Grundplatte getragen werden und auf deren Oberteil angeordnet sind, dadurch gekennzeichnet, daß die aus einem Material von hoher Abmessungsstabilität hergestellte Platte eine geschliffene Unterseite hat, die eine einzige Bezugsfläche (2) darstellt, gegenüber welcher die Position der wesentlichen Organe festgelegt ist, die den Kopfblock (6) und die in Bewegungsrichtung aufwärts und abwärts gelegenen Führungsrollen (15, 16) bilden, wobei die letzteren von Armen (17) getragen werden, die gegenüber der Grundplatte schwenkbar gelagert und an der Unterseite dieser Platte befestigt sind.

2. Tonbandlaufwerk nach Anspruch 1, dadurch gekennzeichnet, daß die Andrückrolle (21) ebenfalls von einem Arm getragen wird, der gegenüber der Grundplatte schwenkbar gelagert und an der Unterseite dieser Platte befestigt ist.

3. Tonbandlaufwerk nach Anspruch 2, dadurch gekennzeichnet, daß die Achsen(Y-Y) für die Schwenkung gegenüber der Grundplatte (1) der die Bandführungsrollen (15, 16) tragenden Arme (17) ungefähr zwischen den Achsen der Bandträger und der Bandführungsrollen (15, 16) angeordnet sind.

4. Tonbandlaufwerk nach Anspruch 2, dadurch gekennzeichnet, daß die Tragarme (17) der Bandführungsrollen (15, 16) und die Andrückrollen (21) ungefähr identische Unteranordnungen bilden.

5. Tonbandlaufwerk nach Anspruch 4, dadurch gekennzeichnet, daß ein Bandfreigabefinger (23) vorgesehen ist, der von einem auf der Unterseite der Grundplatte schwenkbaren Arm (24) getragen wird und von ähnlicher Konstruktion wie die anderen Arme ist.

6. Tonbandlaufwerk nach einem der Ansprüche 2 bis 5, dadurch gekennzeichnet, daß die Schwenkarme (17) zwischen zwei einstellbaren Anschlägen beweglich sind.

7. Tonbandlaufwerk nach Anspruch 1, dadurch gekennzeichnet, daß der Kopfblock (6) auf drei Tragschrauben (8) ruht, die an der Unterseite der Grundplatte (1) befestigt sind.

8. Tonbandlaufwerk nach Anspruch 1, dadurch gekennzeichnet, daß der Kopfblock (6) mit einer Eingangsbandführung (10) und einer Ausgangsbandführung (11) versehen ist.

9. Tonbandlaufwerk nach Anspruch 1, dadurch gekennzeichnet, daß der vor dem Kopfblock (6) angeordnete Teil des Laufwerks völlig frei ist und sich nur die Andrückrolle (21) vor dem Band befindet.

**Claims**

1. Magnetophone deck comprising a base plate (1) two support assemblies (3, 4, 5) for tape winding and unwinding means, a head unit (6), tape-guide rollers (15, 16) disposed respectively upstream and downstream of the head unit, a driving roller (19) and a pressure-applying roller (21), these various component parts being carried by the base plate and located at the upper part thereof, characterized in that said base plate made of a material having a high dimensional stability, has a rectified lower surface (2) with respect to which there is determined the position of the essential elements constituted by the head unit (6) and the upstream and downstream tape-guide rollers (15, 16), the latter being carried by an arm (17) mounted to pivot relative to the base plate and fixed on the lower face of said plate.

2. Magnetophone deck according to claim 1, characterized in that the pressure-applying roller (21) is also carried by an arm (17) mounted to pivot relative to the base plate and fixed on the lower face of said plate.

3. Magnetophone deck according to claim 2, characterized in that the pivot axes (Y-Y) of the arms (17) carrying the tape guide rollers (15, 16) with respect to the base plate, are disposed roughly between the axes of the tape supports and the tape guide rollers (15, 16).

4. Magnetophone deck according to claim 2 characterized in that the support arms (17) of the tape-guide rollers (15, 16) and of the pressure applying roller (21) constitute roughly identical sub-assemblies.

5. Magnetophone deck according to claim 4, comprising a tape disengaging finger member (23) carried by an arm (24) pivotally mounted on the base plate and which is also of a construction similar to that of the other arms.

6. Magnetophone deck according to any one of the claims 2 to 5, characterized in that the pivotal arms (17) are movable between two adjustable stops.

7. Magnetophone deck according to claim 1, characterized in that the head unit (6) bears

FIG.1

FIG. 2

FIG. 3